# FASCICULE DE BREVET EUROPEEN

(11) **EP 0 429 598 B1**
(45) Date de publication et mention de la délivrance du brevet: **29.03.1995**
(21) Numéro de dépôt: 90908558.1
(22) Date de dépôt: 01.06.1990
(51) Int. Cl.: G11B 5/31, G11B 5/48, G11B 5/49, G11B 15/12

(54) **TETE MAGNETIQUE D'ENREGISTREMENT MULTIPISTE A STRUCTURE MATRICIELLE COMPACTE**
MEHRSPUR-AUFNAHMEMAGNETKOPF MIT KOMPAKTER MATRIXARTIGER STRUKTUR
MULTITRACK RECORDING MAGNETIC HEAD WITH A COMPACT MATRIX STRUCTURE

(30) Priorité: 16.06.1989 FR 8908018
(43) Date de publication de la demande: 05.06.1991
(73) Titulaire: THOMSON-CSF, 75008 Paris (FR)
(72) Inventeur: COLINEAU, Joseph, F-91440 Bures-sur-Yvette (FR)
(74) Mandataire: Chaverneff, Vladimir
(86) Numéro de dépôt international: FR9000385
(87) Numéro de publication internationale: WO9016063

(56) Documents cités:
- US-A- 3 492 663
- US-A- 3 500 347
- US-A- 3 510 855
- US-A- 3 562 759
- US-A- 3 662 361
- IBM TECHNICAL DISCLOSURE BULLETIN. vol. 9, no. 1, juin 1966, ARMONK,N.Y.,USApages 66 - 67; P.A. ROLAND et al: "BATCH FABRICATION OF MAGNETIC TOROID ARRAY"voir le document en entier

## Description

La présente invention se rapporte à une tête magnétique d'enregistrement multipiste à structure matricielle compacte.

On connaît, par exemple d'après la Demande de Brevet français 88 05592 une tête magnétique d'enregistrement à structure matricielle destinée à l'enregistrement magnétique multipiste. Une telle tête est formée d'un réseau dense de micro-têtes magnétiques. Ce réseau comprend un ensemble de plots magnétiques à section sensiblement carrée faisant saillie en matrice cartésienne sur un substrat support. Les plots sont généralement formés par rainurage d'un pavé en ferrite. Des conducteurs disposés en lignes et colonnes sont disposés dans les rainures et recouverts ou noyés dans du verre, et des pôles magnétiques en Sendust ou matériau similaire sont formés sur la face polie des rainures ainsi remplies. Ces pôles sont tous sensiblement parallèles à l'une des diagonales des plots et joignent à chaque fois les coins en vis-à-vis de deux plots, un entrefer étroit étant ménagé au milieu de ces pôles.

Cette tête fonctionne correctement, mais, étant donné que chaque plot n'est relié qu'à deux micro-têtes, on n'utilise pas au mieux la surface occupée par la tête.

La présente invention a pour objet une tête magnétique multipiste à structure matricielle compacte qui permette, pour une même surface de tête, d'avoir le plus grand nombre possible de micro-têtes, et ce, sans diminuer l'efficacité de ces micro-têtes.

La tête magnétique d'enregistrement multipiste à structure matricielle compacte de micro-têtes magnétiques, cette tête comprenant une matrice de plots en matériau magnétique faisant saillie sur un substrat support en matériau magnétique, des conducteurs électriques étant disposés en matrice dans les espaces inter-plots et recouverts de matériau non magnétique, chaque micro-tête ayant un circuit magnétique formé par : deux plots voisins, la partie du substrat les joignant, et des pôles en matériau à forte perméabilité magnétique formés sur au moins une partie de la surface de chacun de ces deux plots et se rejoignant, sur le matériau non magnétique, sensiblement à mi-chemin des deux plots, au niveau d'un entrefer, est caractérisée par le fait que chaque plot magnétique entre dans le circuit magnétique de quatre micro-têtes voisines, et que les plots sont disposés en quinconce par rapport à la matrice des fils électriques, ce qui permet en particulier de diminuer la consommation et d'augmenter la fréquence maximale de fonctionnement .

La présente invention sera mieux comprise à la lecture de la description détaillée de plusieurs modes de réalisation, pris comme exemples non limitatifs et illustrés par le dessin annexé, sur lequel
- la figure 1 est une vue partielle de face d'une tête magnétique de l'art antérieur,
- la figure 2 est une vue partielle de face d'une tête magnétique conforme à l'invention,
- les figures 3 à 5 sont des vues partielles de face de variantes de têtes magnétiques conformes à l'invention,
- la figure 6 est une vue montrant la place laissée libre pour le passage des conducteurs dans une tête conforme à l'invention,
- la figure 7 est une vue partielle en coupe d'une tête conforme à l'invention et réalisée selon la technique des couches minces, et
- les figures 8 à 9 sont des vues schématiques d'exemples de formes de plots de la tête magnétique conforme à l'invention.

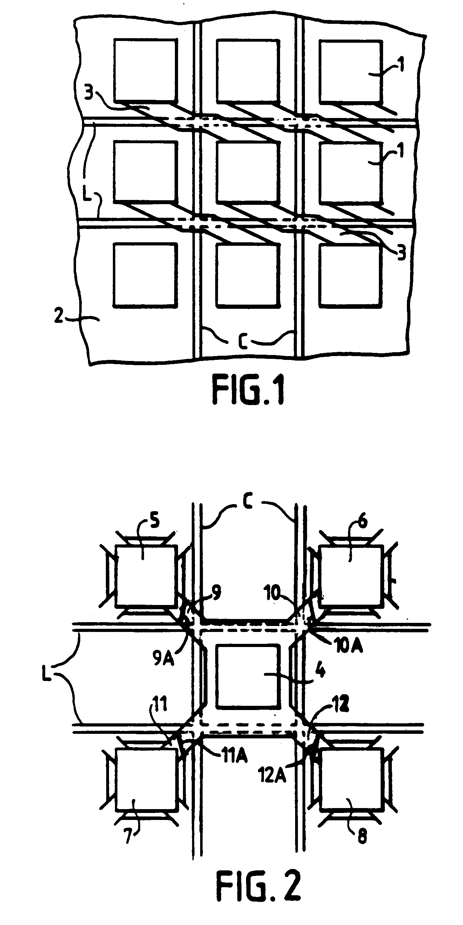

La tête magnétique de l'art antérieur représentée en figure 1 comporte un réseau cartésien de plots magnétiques 1. Ces plots ont une section de forme carrée et sont formés sur un substrat 2 en ferrite, par exemple par rainurage de ce substrat par des rainures en lignes et colonnes. Des conducteurs de lignes L et de colonnes C sont disposés dans ces rainures et recouverts de verre. La surface du verre est polie, et on y forme les pôles 3. Ces pôles 3, sensiblement parallèles à l'une des diagonales des plots, joignent à chaque fois, en formant une sorte d'étranglement, deux plots dont les coins sont en vis-à-vis et dont les diagonales aboutissant à ces coins sont dans le prolongement l'une de l'autre. Un entrefer est formé au milieu de chacun de ces étranglements.

La tête magnétique de la figure 2 a la même surface totale que celle de la figure 1, mais a deux fois moins de plots, ces plots étant disposés en quinconce, c'est-à-dire qu'un plot quelconque (sauf les plots du bord de la tête, bien entendu) tel que le plot 4, représenté au centre de la figure 2, n'est entouré que de quatre autres plots (5 à 8), alors que dans la tête de l'art antérieur, un plot est entouré de huit autres plots (figure 1). Pour cette notion d'entourage, il est important de noter qu'il faut en fait considérer non les plots eux-mêmes, mais les cases délimitées par les fils de lignes et de colonnes et contenant ces plots. Dans le cas de la figure 2, il n'y a pas d'ambiguïté, mais pour les figures 8 et 9, il pourrait y en avoir, et c'est pour cette raison que pour ces deux figures 8 et 9 on a représenté les fils de lignes et de colonnes délimitant les lignes et colonnes de plots.

Chaque plot de la tête conforme à l'invention est relié aux quatre plots qui l'entourent par des pôles magnétiques. Dans l'exemple de la figure 2, le plot 4 est relié aux plots 5 à 8 par des "ponts" de pôles référencés 9 à 12 respectivement. Chaque pont de pôles a des extrémités élargies et une partie centrale rétrécie. Chacun de ces ponts est formé de deux pôles relatifs à chacun des plots reliés par le pont. Ces pôles sont avantageusement symétriques par rapport au milieu du pont. Les extrémités de ces ponts peuvent avoir, au-dessus des plots, des pavés d'une surface égale ou légèrement supérieure à celle de ces plots. Les parties centrales des ponts comportent sensiblement en leur milieu un entrefer étroit (1 micron ou moins). Les entrefers des ponts de pôles 9 à 12 sont respectivement référencés 9A à 12A. Ainsi, dans la tête de la présente invention, le plot 4 fait partie du circuit magnétique des quatre plots voisins 5 à 8 et des quatre micro-têtes dont les entrefers sont référencés 9A à 12A.

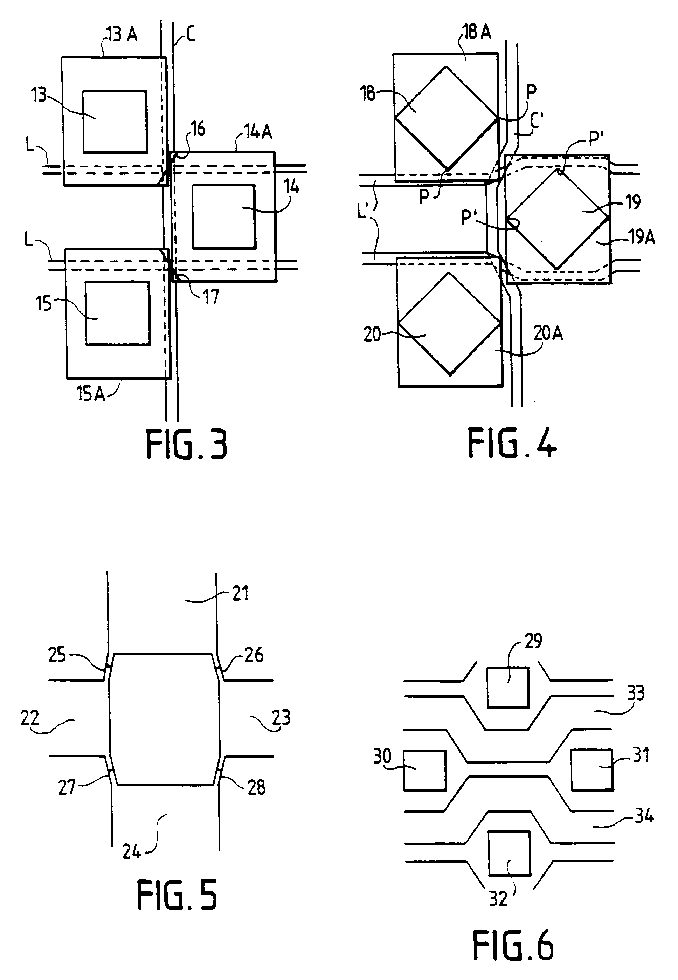

On a représenté sur les figures 3 à 5, des variantes de réalisation de pôles et de plots.

Sur la figure 3, les plots 13 à 15, seuls représentés, ont des côtés parallèles aux fils de lignes et de colonnes respectivement. Les pôles sont ici des "pavés" polaires 13A à 15A entourant les plots 13 à 15 respectivement et se rejoignant par leur coins. Ces pavés polaires ont des dimensions telles que la zone de leur jonction ait une largeur inférieure à la longueur des côtés des plots, afin de concentrer le flux magnétique dans l'entrefer qui est pratiqué dans cette zone (entrefers 16 entre 13A et 14A, et 17 entre 14A et 15A).

Sur l'exemple de la figure 4, les côtés des plots 18 à 20, seuls représentés, font un angle d'environ 45° par rapport aux directions principales des fils de lignes et de colonnes, tandis que les "pavés" polaires 18A à 20A ont des côtés parallèles à ces directions principales. Etant donné que dans cet exemple les pointes P des plots d'une rangée ou d'une colonne de plots sont pratiquement au niveau des pointes P' des plots de la rangée ou de la colonne de plots adjacente, les fils de lignes L' et de colonne C' ne peuvent pas être rectilignes et doivent contourner ces pointes.

Sur l'exemple de la figure 5, le réseau de plots est semblable à celui des figures 2 et 3 (seuls ont été représentés les plots 21 à 24). Les pôles 25 à 28 sont des bandes étroites joignant les coins en vis-à-vis des pavés. On voit sur cette figure que l'on peut donner un azimut différent aux entrefers voisins.

La figure 6, se rapporte à un mode de réalisation utilisant la technique des couches minces pour réaliser les conducteurs, ou même l'ensemble de la tête. On a représenté sur cette figure 6 quatre plots 29 à 32 et des conducteurs de lignes 33,34 occupant le maximum de place disponible entre les plots tout en ménageant entre eux et par rapport aux plots un espace d'isolement suffisant. Ces conducteurs de lignes sont ensuite recouverts d'une couche isolante, et les conducteurs de colonnes sont déposés de façon similaire.

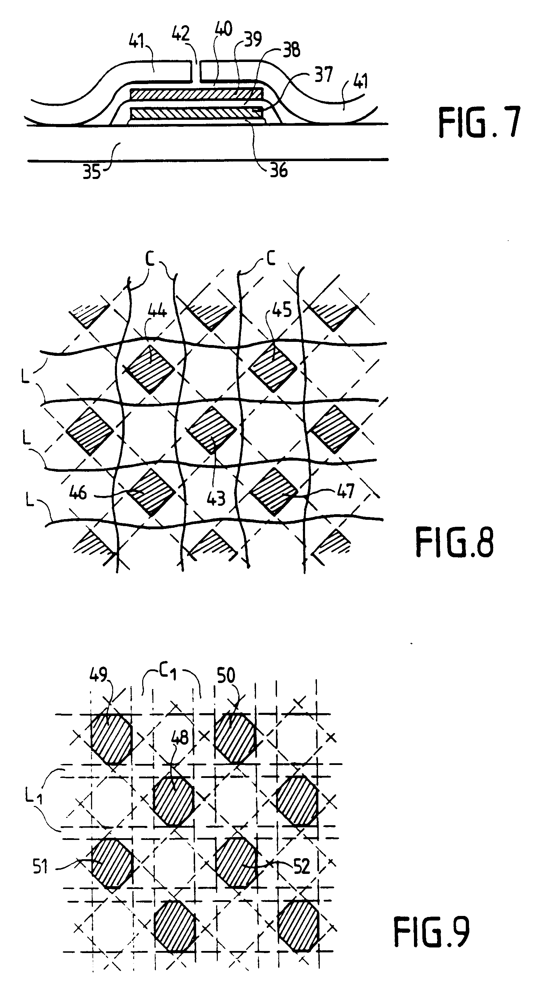

La figure 7 est une vue en coupe simplifiée de ce mode de réalisation. On y voit le substrat 35 en ferrite de la tête, qui peut éventuellement être également réalisé selon la technique des couches minces. Sur ce substrat 35 sont déposés successivement : une couche isolante 36, une couche conductrice 37, par exemple un conducteur de ligne, une autre couche isolante 38, une deuxième couche conductrice 39, par exemple un conducteur de colonne, une couche isolante 40, et une couche 41 de matériau constituant les pôles, tel que du "Sendust". Un entrefer 42 est ménagé dans cette couche 41.

Sur la figure 8, on a représenté une partie d'un réseau de plots similaire au réseau de la figure 4. Sur cette figure, le plot central 43 n'a que quatre plots "voisins" au sens de la présente invention, qui sont référencés 44 à 47. Ces voisins se trouvent dans des "cases" adjacentes à la sienne, les cases étant délimitées par des conducteurs de lignes et des conducteurs de colonnes consécutifs.

Comme précisé ci-dessus en référence à la figure 4, ce mode de réalisation de la figure 8 ne permet pas d'avoir des conducteurs de lignes et de colonnes rectilignes lorsque le réseau de plots est dense. Pour y remédier, on peut comme représenté en figure 9 "rogner" les pointes ou coins des plots tels que les plots 48 à 52 de la figure 9, dont la section devient octogonale. Les conducteurs de lignes L1 et de colonnes C1 peuvent alors être pratiquement rectilignes sans que l'on ait à diminuer la densité du réseau de plots. Les plots peuvent par exemple être réalisés par quatre rainurages d'un pavé de ferrite : deux rainurages orthogonaux selon la direction des fils, et deux autres rainurages orthogonaux entre eux, à 45° des premiers.

Les principaux avantages de la tête magnétique de l'invention sont les suivants :
- les conducteurs d'excitation ont une inductance plus faible que dans les têtes de l'art antérieur, ce qui diminue la puissance consommée par la tête et en augmente la fréquence maximale de fonctionnement,
- les conducteurs présentant une inductance mutuelle plus faible que dans les têtes de l'art antérieur, ce qui diminue également la puissance consommée et augmente également la fréquence maximale de fonctionnement,
- l'efficacité des micro-têtes peut être plus élevée que dans les têtes de l'art antérieur, puisqu'on peut élargir les pôles sans créer de champs parasites trop importants, la distance entre plots étant plus grande,
   Dans certains cas, ces pôles consécutifs d'une même ligne (tels que les pôles 9,10 de la figure 2) peuvent avoir des directions différentes, ce qui fait que leurs entrefers ont alors aussi des directions différentes. Ainsi, lorsque l'on positionne la tête par rapport à la bande magnétique qu'elle enregistre de façon que des entrefers consécutifs d'une même ligne coopèrent avec des pistes consécutives de cette bande, ces entrefers consécutifs, qui ont donc des orientations différentes, permettent l'enregistrement dit "en azimut",
- les opérations d'alignement entre la structure supérieure (comprenant les pôles et les entrefers) et la structure inférieure (les plots et leur substrat magnétique) sont simplifiées, puisque l'on peut tolérer des décalages plus grands, les plots voisins étant plus distants,
- on peut réaliser les conducteurs, et même l'ensemble de la structure de la tête, en couches minces. Les figures 6 et 7 par exemple montrent que la disposition des plots en quinconce permet, à efficacité égale, de dégager une surface beaucoup plus grande que dans les cas de la tête de la figure 1 pour le passage des conducteurs. Cette caractéristique est particulièrement importante, car la limitation de la section des conducteurs électriques est actuellement l'un des obstacles majeurs à l'intégration en couches minces à haute densité des têtes d'enregistrement.

## Revendications

1. Tête magnétique d'enregistrement multipiste à structure matricielle compacte de micro-têtes magnétiques, cette tête comprenant une matrice de plots en matériau magnétique faisant saillie sur un substrat support en matériau magnétique, des conducteurs électriques étant disposés en matrice dans les espaces inter-plots et recouverts de matériau non magnétique, chaque micro-tête ayant un circuit magnétique formé par : deux plots voisins, la partie du substrat les joignant, et des pôles en matériau à forte perméabilité magnétique formés sur au moins une partie de la surface de chacun de ces deux plots et se rejoignant, sur le matériau non magnétique sensiblement à mi-chemin des deux plots, au niveau d'un entrefer, caractérisée par le fait que chaque plot magnétique (4 à 8, 13 à 15, 18 à 20, 29 à 32, 43 à 47, 48 à 52) entre dans le circuit magnétique de quatre micro-têtes voisines (9A-12A, 16 et 17, 25 à 28), et que les plots sont disposés en quinconce par rapport à la matrice des fils électriques (figures 2,8,9).

2. Tête magnétique selon la revendication 1, caractérisée par le fait que les conducteurs électriques sont formés de couches minces.

3. Tête magnétique selon l'une des revendications 1 ou 2, caractérisée par le fait qu'elle est formée de couches minces.

## Patentansprüche

1. Magnetischer Vielspur-Aufzeichnungskopf mit kompakter Matrixstruktur von Mikromagnetköpfen, wobei dieser Kopf eine Matrix von Bereichen aus Magnetmaterial besitzt, die über ein Trägersubstrat aus magnetischem Material vorstehen, und wobei elektrische Leiter matrixartig in den Zwischenräumen zwischen den Bereichen angeordnet und mit unmagnetischem Material bedeckt sind, wobei jeder Mikrokopf einen Magnetkreis besitzt, der aus zwei benachbarten Bereichen, aus der diese Bereiche miteinander verbindenden Zone des Substrats und Polen aus einem Material mit großer magnetischer Permeabilität gebildet wird, die sich auf mindestens einem Teil der Oberfläche jeder dieser Bereiche befinden und miteinander auf dem unmagnetischen Material im wesentlichen auf halber Strecke zwischen zwei Bereichen in Höhe eines Magnetspalts verbunden sind, dadurch gekennzeichnet, daß jeder Magnetbereich (4 bis 8, 13, bis 15, 18 bis 20, 29 bis 32, 43 bis 47, 48 bis 52) zum Magnetkreis von vier benachbarten Mikroköpfen (9A bis 12A, 16 und 17, 25 bis 28) gehört, und daß die Bereiche versetzt bezüglich der Matrix von elektrischen Drähten angeordnet sind (Figuren 2, 8, 9).

2. Magnetkopf nach Anspruch 1, dadurch gekennzeichnet, daß die elektrischen Leiter von dünnen Schichten gebildet werden.

3. Magnetkopf nach einem der Ansprüche 1 oder 2, dadurch gekennzeichnet, daß er aus dünnen Schichten gebildet ist.

## Claims

1. Multi-track magnetic recording head with a compact matrix structure of magnetic micro-heads, this head comprising a matrix of blocks of magnetic material projecting from a support substrate of magnetic material, electrical conductors being arranged in the matrix in the inter-block spaces, and covered with non-magnetic material, each micro-head having a magnetic circuit formed by: two adjacent blocks, the part of the substrate joining them, and poles made of material with a high magnetic permeability which are formed on at least a part of the surface of each of these two blocks and joining together, on the non-magnetic material substantially midway along the two blocks, at the site of a gap, characterized in that each magnetic block (4 to 8, 13 to 15, 18 to 20, 29 to 32, 43 to 47, 48 to 52) comes into the magnetic circuit of four adjacent micro-heads (9A-12A, 16 and 17, 25 to 28), and that the blocks are arranged in quincunx with respect to the matrix of electrical wires (Figures 2, 8, 9).

2. Magnetic head according to Claim 1, characterized in that the electrical conductors are formed by thin films.

3. Magnetic head according to one of Claims 1 or 2, characterized in that it is formed by thin films.
